Europäisches Patentamt

European Patent Office

Office européen des brevets

(19)

(11) Veröffentlichungsnummer: **0 433 725 A1**

(12) **EUROPÄISCHE PATENTANMELDUNG**

(21) Anmeldenummer: 90122817.1

(22) Anmeldetag: 29.11.90

(51) Int. Cl.5: **F16C 43/04**, F16C 25/08,
//F16D3/72

(30) Priorität: 21.12.89 DE 3942335

(43) Veröffentlichungstag der Anmeldung:
26.06.91 Patentblatt 91/26

(84) Benannte Vertragsstaaten:
**DE FR GB IT**

(71) Anmelder: **Bodenseewerk Gerätetechnik GmbH**
**Alte Nussdorfer Strasse 15 Postfach 1120**
**W-7770 Überlingen/Bodensee(DE)**

(72) Erfinder: **Kempas, Hagen**
**Kreuzstrasse 25A**
**W-7770 Überlingen 12(DE)**

(74) Vertreter: **Wolgast, Rudolf, Dipl.-Chem. Dr. et al**
**Dipl.-Phys. Jürgen Weisse Dipl.Chem. Dr.**
**Rudolf Wolgast Bökenbusch 41 Postfach 11 03 86**
**W-5620 Velbert 11 Langenberg(DE)**

(54) **Verfahren zum Ausgleich von Toleranzen bei einer Drehlagerung mit Kugellagern.**

(57) Die äußeren Kugellagerringe (16, 26) von zwei Kugellagern (12, 14) werden über ein Kardangelenk (42) gegeneinander abgestützt. Durch Schrauben (44, 50) werden über Kardangelenke (48, 54) gegeneinandergerichtete axiale Vorspannkräfte auf die inneren Kugellagerringe (18, 28) ausgeübt. Bei rotierenden Kugellagern werden die äußeren Kugellagerringe (16, 26) ausgerichtet. Bei rotierenden Kugellagern werden mittels eines erhärtenden Klebers die äußeren Kugellagerringe (16, 26) in einer Lagerhülse (10) und die inneren Kugellagerringe (18, 28) auf einer Welle (36) fixiert.

EP 0 433 725 A1

# VERFAHREN ZUM AUSGLEICH VON TOLERANZEN BEI EINER DREHLAGERUNG MIT KUGELLAGERN

## Technisches Gebiet

Die Erfindung betrifft ein Verfahren zum Ausgleich von Toleranzen bei einer Drehlagerung mit zwei in einem Lagerglied sitzenden Kugellagern, die je einen inneren und einen äußeren Kugellagerring aufweisen, wobei die Kugellager gegeneinander verspannt sind.

## Zugrundeliegender Stand der Technik

Um einen unbegrenzten Drehfreiheitsgrad zwischen zwei Baugruppen zu realisieren, ist es bekannt, zwei axial gegeneinander versetzte Kugellager vorzusehen und diese in axialer Richtung gegeneinander zu verspannen. Damit ergibt sich eine hohe translatorische Steifigkeit. Um die Achse des Drehfreiheitsgrades ergibt sich eine geringe Reibung.

Es ist bekannt, Kugellager in einer Lagerhülse o. dgl. an den Außenflächen der äußeren Lagerringe auszurichten. Fehler dieser Flächen gegenüber den Laufbahnen der Kugellagerringe beeinträchtigen jedoch die Lagerung und führen z. B. bei Kreisellagerungen zu Driften des Kreisels.

Durch die DE-A-37 10 185 ist eine Festlagerung für eine Spindel mit einem die Radialkräfte der Spindel übertragenden Wälzlager und einem die Radialkräfte aufnehmenden Schrägwälzlager bekannt. Zwischen den Außenringen der Wälzlager sitzt ein Zwischenring. In den Zwischenring sind Druckfedern eingebaut, welche den Außenring des Radialwälzlagers spielfrei einstellen. Um den Außenring des Schrägwälzlagers ohne Gefahr einer Schiefstellung auf einer Schulterfläche des Zwischenringes zu halten, ist zwischen einer Stirnfläche des Außenringes und einem Gehäusedeckel ein elastisch nachgiebiger Federring eingebaut.

Die US-A-4 665 605 zeigt eine Kardananordnung zum Antrieb eines dynamisch abgestimmten Kreisels. Über diese Kardananordnung ist ein Kreiselrotor mit einer Antriebswelle gekuppelt.

Aus der Zeitschrift "Plaste und Kautschuk" (1956), 127-130, ist die Anwendung von Klebstoffen im Maschinenbau geschildert. Beispielsweise werden Lagerbuchsen mittels einer Zentriervorrichtung schlagfrei in Bohrungen eines Maschinenteils eingeklebt.

In einer Firmendruckschrift Nr. 41 114 "FAG Spindellager für Werkzeugmaschinen" der FAG Kugelfischer Georg Schäfer & CO, Schweinfurt sind Paare von Spindellagern beschrieben, die durch Tellerfedern vorgespannt sind. Dadurch wird ein spielfreier Lauf und eine hohe Steifigkeit des Spindelsystems erreicht. Beide Lager sind bei allen Betriebszuständen belastet.

Die DE-C-30 18 091 beschreibt eine spielfreie Wellenlagerung für einen Kreiselläufer mit zwei gleichachsigen Wälzkörperkränzen, deren axiale Vorspannung einstellbar ist. Die Außenlaufflächen der Kränze sind von einer einstückigen Buchse gebildet. Eine der Innenlaufflächen ist von der Welle gebildet. Die andere Innenlauffläche ist von einem Innenlaufring gebildet. Der Innenlaufring sitzt auf der Welle mit einer Passung, die eine Verschiebung nur durch hohe Axialkraft gestattet.

Das DE-U-86 31 287 zeigt eine Lagerung für eine Welle, bei der zwischen einem Axiallager und einem Radiallager ein als Einsatz ausgebildetes, kräfteaufnehmendes und mit einem Gehäuse verbundenes Widerlager angeordnet ist. Innerhalb des Widerlagers sind mehrere auf die Lagerringe einwirkende Federelemente vorgesehen. Dadurch wird das Lager stets mit einer Vorspannung belastet.

## Offenbarung der Erfindung

Der Erfindung liegt die Aufgabe zugrunde, ein Verfahren zum Ausgleich von Toleranzen bei einer Drehlagerung mit Kugellagern zu schaffen, welches es ermöglicht, mit geringerem Aufwand eine Lagerung der eingangs genannten Art mit hoher Laufruhe und langer Lebensdauer herzustellen.

Erfindungsgemäß ist dieses Verfahren gekennzeichnet durch die Verfahrensschritte:

a) Abstützen der Kugellagerringe einer ersten Art gegeneinander über ein inneres allseitig bewegliches Gelenk, dessen Schwenkpunkt auf der Drehachse der Drehlagerung liegt,

b) Ausüben von gegeneinandergerichteten axialen Kräften auf die Kugellagerringe der zweiten Art über je ein äußeres allseitig bewegliches Gelenk, dessen Schwerpunkt auf der Drehachse der Drehlagerung liegt, und

c) Fixieren der äußeren Kugellagerringe in dem Lagerglied (10) unter der Vorspannung.

Dabei sind vorteilhafterweise die Kugellagerringe der ersten Art die äußeren Kugellagerringe und die Kugellagerringe der zweiten Art die inneren Kugellagerringe.

Die Abstützung und Kraftausübung kann über Kardangelenke als allseitig bewegliche Gelenke erfolgen. Solche Kardangelenke stehen beispielsweise in Form von Federgelenken nach Art der US-A-4 665 605 zur Verfügung.

Die Fixierung kann mittels eines aushärtenden Klebers erfolgen, der in einen Klebspalt zwischen Lagerhülse und äußeren Kugellagerringen eingebracht wird. Die axialen Kräfte können durch Schrauben ausgeübt werden, die in die Stirnflächen einer in den Kugellagern gelagerten Welle eingeschraubt werden und mit ihren Köpfen auf die äußeren, allseitig beweglichen Gelenke drücken. Während des Fixierens können die inneren und die äußeren Kugellagerringe gegeneinander rotieren. Nach dem Fixieren der Kugellagerringe in der Lagerhülse können die äußeren, allseitig beweglichen Gelenke ebenso wie die Schrauben entfernt werden. Das innere, allseitig bewegliche Gelenk verbleibt in dem Lager.

Ein Ausführungsbeispiel der Erfindung ist nachstehend unter Bezugnahme auf die zugehörigen Zeichnungen näher erläutert.

## Kurze Beschreibung der Zeichnungen

Fig. 1    zeigt einen Längsschnitt eines nach dem erfindungsgemäßen Verfahren hergestellten Drehlagers mit den äußeren, allseitig beweglichen Gelenken und Schrauben zur Erzeugung der axialen Kräfte.

Fig. 2    ist eine schematische Darstellung und veranschaulicht den Ausgleich von Toleranzen bei dem erfindungsgemäßen Verfahren.

Fig. 3    ist eine schematisch-perspektivische Darstellung eines bei dem Verfahren als allseitig bewegliches Gelenk verwendbaren Kardangelenkes.

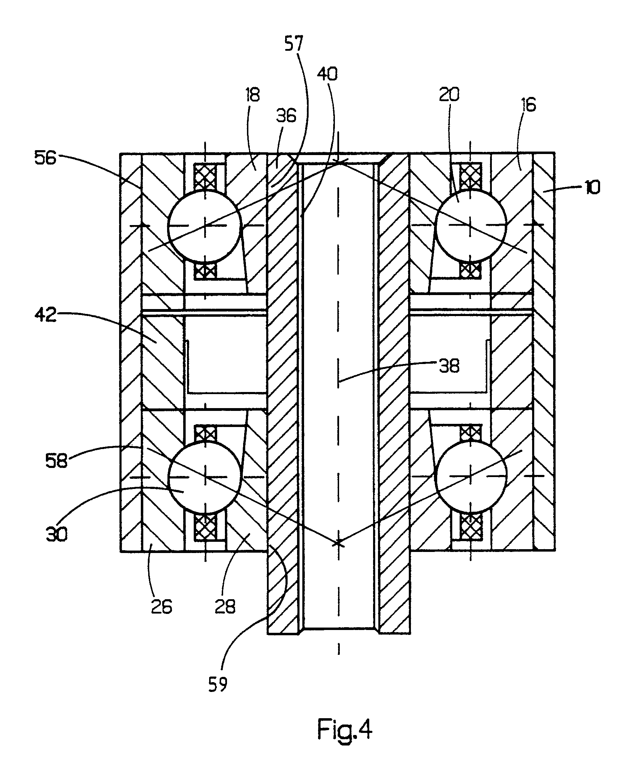

Fig. 4    zeigt eie fertig montierte Lagereinheit.

## Bevorzugte Ausführung der Erfindung

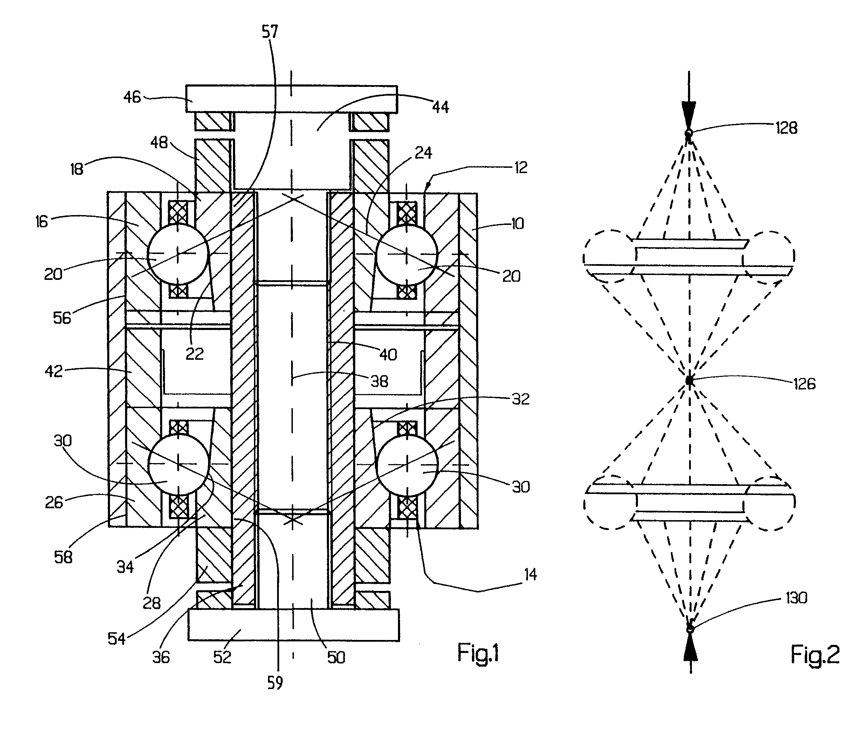

In einer Lagerhülse 10 sitzen in axialem Abstand voneinander zwei Kugellager 12 und 14. Das Kugellager 12 hat einen äußeren Kugellagerring 16 und einen inneren Kugellagerring 18. Zwischen den Kugellagerringen 16 und 18 sind Kugeln 20 gehalten. Der innere Kugellagerring 18 weist eine Lauffläche 22 auf. Die Lauffläche 22 ist an ihrem in Figur 1 oberen Ende 24 nach außen gewölbt und greift über die Kugeln 20. Das Kugellager 14 hat einen äußeren Kugellagerring 26 und einen inneren Kugellagerring 28. Zwischen den Kugellagerringen 26 und 28 sind Kugeln 30 gehalten. Der innere Kugellagerring 28 weist eine Lauffläche 32 auf. Die Lauffläche 32 ist an ihrem in Figur 1 unteren Ende 34 nach außen gewölbt und greift unter die Kugeln 30.

Die inneren Kugellagerringe 18 und 28 sitzen auf einer Welle 36. Die Welle 36 ist eine Hohlwelle mit einer Bohrung 38 und einem Innengewinde 40.

Ein Kardangelenk 42 sitzt zwischen den beiden äußeren Kugellagerringen 16 und 26. Die beiden Kugellagerringe 16 und 26 sind "Kugellagerringe einer ersten Art", nämlich äußere Kugellagerringe. Das Kardangelenk 42 ist ein "allseitig bewegliches Gelenk". Das Kardangelenk 42 umgibt die Welle 36. In das Innengewinde 40 ist von der in Figur 1 oberen Stirnfläche der Welle 36 her eine Schraube 44 mit einem Kopf 46 eingeschraubt. Zwischen dem Kopf 46 der Schraube 44 und der Stirnfläche des inneren Kugellagerringes 18 sitzt ein Kardangelenk 48. In das Innengewinde 40 ist weiterhin von der in Figur 1 unteren Stirnfläche der Welle 36 her eine Schraube 50 mit einem Kopf 52 eingeschraubt. Zwischen dem Kopf 52 und der Stirnfläche des inneren Kugellagerringes 28 sitzt ein Kardangelenk 54. Die beiden Kugellagerringe 18 und 28 sind "Kugellagerringe einer zweiten Art", nämlich innere Kugellagerringe. Die Kardangelenke 48 und 54 sind ebenfalls "allseitig bewegliche Gelenke". Auch die Kardangelenke 48 und 54 sind ringförmig und umgeben die Schäfte der Schrauben 44 bzw. 50.

Zwischen der Lagerhülse 10 einerseits und den äußeren Kugellagerringen 16 und 28 andererseits sind Klebspalte 56 bzw. 58 gebildet. In diese Klebspalte 56 und 58 wird ein erhärtender Kleber zur Fixierung der äußeren Kugellagerringe 16 und 26 in der Lagerhülse 10 eingebracht. Entsprechend wird erhärtender Kleber in Klebspalte 57 und 59 zwischen den inneren Kugellagerringen 18 bzw. 28 und der Welle 36 eingebracht.

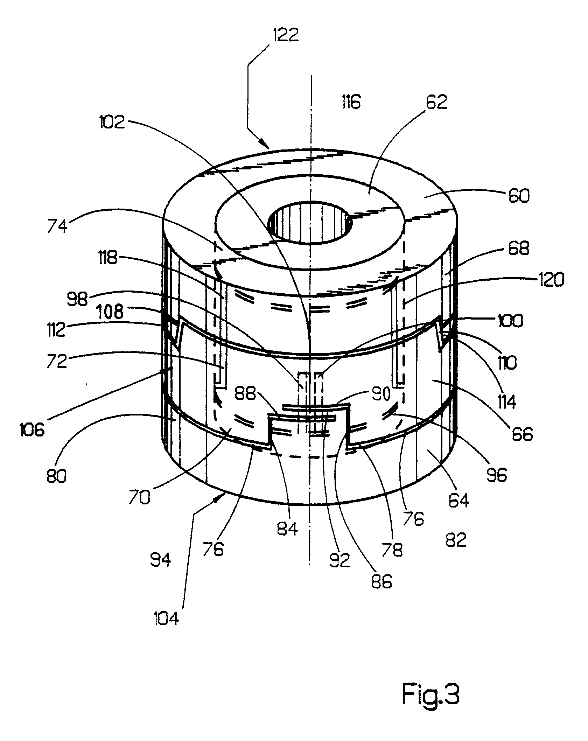

Der Aufbau der Kardangelenke 42, 48 und 54 ist aus Figur 3 ersichtlich. Diese Kardangelenke sind nach Art der US-A-4 665 605 ausgebildet.

Jedes Kardangelenk 42, 48, 54 besteht aus zwei koaxial ineinandersitzenden Ringkörpern 60 und 62. Die Ringkörper sind durch in Umfangsrichtung verlaufende Schnitte in je drei Ringe unterteilt. Der äußere Ringkörper 60 ist in drei Ringe 64, 66 und 68 unterteilt. Der innere Ringkörper 62 ist in drei Ringe 70, 72 und 74 unterteilt. Dabei ist der Ring 64 mit dem Ring 70 verbunden. Der Ring 66 ist mit dem Ring 72 verbunden. Der Ring 68 ist mit dem Ring 74 verbunden. Zwischen dem Ring 64 und dem Ring 66 sind zwei Schnitte angebracht, ein Schnitt 76 und ein Schnitt 78. Jeder der Schnitte 76 und 78 weist einen sich in Umfangsrichtung über etwas weniger als 180° erstreckenden Mittelteil 80 bzw. 82 und z-förmige Endteile auf, von denen in Figur 3 nur die Endteile 84 bzw. 86 sichtbar sind. Entsprechende Endteile sind um 180° versetzt auf der in Figur 3 hinteren Seite des Ringkörpers 60 vorgesehen. Die in Umfangsrichtung verlaufenden Abschnitte 88 bzw. 90 der Endteile überlappen sich und bilden zwischen sich eine in Umfangsrichtung sich erstreckende Blattfeder 92, über welche die beiden Ringe 64 und 66 miteinander verbunden sind. Eine entsprechende, in Umfangsrichtung sich erstreckende Blattfeder ist auf der diametral gegenüberliegenden Seite des Ringkörpers 60 gebildet.

Die Ringe 70 und 72 des inneren Ringkörpers 62 sind durch zwei Schnitte 94 und 96 voneinander getrennt. Jeder der Schnitte 94 und 96 erstreckt sich in Umfangsrichtung über etwas weniger als 180° und weist in Axialrichtung abgewinkelte Enden auf. In Figur 3 sind nur die vorderen Enden 98 und 100 sichtbar. Entsprechende abgewinkelte Enden der Schnitte 94 und 96 sind auf der gegenüberliegenden Seite des Ringkörpers 62 vorgesehen. Zwischen den abgewinkelten Enden 98 und 100 der Schnitte 94 bzw. 96 ist eine sich in Axialrichtung erstreckende Blattfeder 102 gebildet. Die Blattfeder 102 und eine entsprechende, um 180° winkelversetzte Blattfeder verbinden die Ringe 70 und 72. Wenn nun die Ringe 64 und 70 zu einem ersten Kardanring 104 verbunden werden und die Ringe 66 und 72 zu einem zweiten Kardanring 106 verbunden werden, dann bilden die Blattfedern 92 und 102 sowie die entsprechenden Blattfedern auf der gegenüberliegenden Seite Kreuzfedergelenke. Durch diese Kreuzfedergelenke sind die beiden Kardanringe 104 und 106 um eine von vorn nach hinten in Figur 3 verlaufende Achse schwenkbar miteinander verbunden.

In entsprechender Weise sind die Ringe 66 und 68 durch zwei Schnitte 108 und 110 mit z-förmigen Enden voneinander getrennt, die zwischen sich in Umfangsrichtung sich erstreckende Blattfedern 112 und 114 bilden, über welche die Ringe 66 und 68 miteinander verbunden sind. Die Blattfedern 112 und 114 liegen in der gleichen Radialebene in der Mitte des Ringes 66 wie die Blattfeder 92, sind gegen diese aber um 90° winkelversetzt. Ebenso sind die Ringe 72 und 74 durch zwei Schnitte ähnlich den Schnitten 94 und 96 voneinander getrennt, von denen in Figur 3 nur der Schnitt 116 sichtbar ist. Die abgewinkelten Enden dieser Schnitte bilden in Axialrichtung sich erstreckende Blattfedern 118 und 120, über welche die Ringe 72 und 74 miteinander verbunden sind. Die Blattfedern 118 und 120 kreuzen die Blattfedern 112 und 146 und bilden mit diesen Kreuzfedergelenke. Wenn die Ringe 68 und 74 zu einem dritten Kardanring 122 miteinander verbunden sind, dann sind der zweite und der dritte Kardanring 106 bzw. 122 über ein Paar von Kreuzfedergelenken 112, 118 und 114, 120 um eine von links nach rechts in Figur 3 verlaufende Achse schwenkbar verbunden. Der dritte Kardanring 122 ist dann gegenüber dem ersten Kardanring 104 allseitig beweglich verbunden. Das so gebildete Kardangelenk wird so ausgelegt, daß es primär eine Axialkraft überträgt, radial aber relativ weich ist und in der Ebene senkrecht zur Lagerachse nur sehr geringe Momente überträgt.

In vielen Fällen können vereinfachte Gelenke vorgesehen sein, die nur aus den Teilen des inneren Ringkörpers 62 aufgebaut ins, bei denen also die Gelenke jeweils nur die axialen Blattfedern, z.B.

1o2, enthalten. Diese Blattfedern übertragen die Kräfte in axialer Richtung und gestatten die allseitige Schwenkbewegung um die - sehr kleinen - Ausgleichwinkel.

Bei der Montage der in Figur 1 dargestellten Lager wird zwischen die äußeren Kugellagerringe 16 und 26 das Kardangelenk 42 eingesetzt. Das Kardangelenk 42 nimmt über seine hohe axiale Steifigkeit die Lagervorspannung auf. Das Kardangelenk überträgt jedoch praktisch keine Momente, so daß sich die Kugellager 12 und 14 frei ausrichten können. Analog dazu werden die Kräfte zur Erzeugung der Lagervorspannung von den Schrauben 44 und 50 über die Kardangelenke 48 und 54 auf die inneren Kugellagerringe 18 und 28 übertragen. Lager wird dabei angetrieben, so daß die inneren Kugellagerringe 18, 28 gegenüber den äußeren Kugellagerringen 16, 26 rotieren. Die Kugellagerringe 16, 18, 26, 28 können sich dabei unter Vorspannung um die Gelenkpunkte 126 bzw. 128, 130 ausrichten. Die kinematischen Verhältnisse sind in Figur 2 schematisch dargestellt. Die Kugeln 20 bzw. 30 übertragen alle die gleiche Axialkraft. Die Laufbahnen der Kugellagerringe werden entsprechend ausgerichtet. Diese Stellung wird durch das Aushärten des Klebers in den ca. 1 bis 2 m breiten Klebspalten 56, 58 bzw. 57, 59 fixiert.

Nach dem Aushärten des Klebers werden die Hilfsteile, nämlich die Schrauben 44 und 50 und die Kardangelenke 48 und 54 demontiert. Das Kardangelenk 42 verbleibt in der Lagereinheit. Die so erhaltene Lagereinheit kann dann z.B. in ein Kreiselgehäuse eingesetzt werden.

## Ansprüche

1. Verfahren zum Ausgleich von Toleranzen bei einer Drehlagerung mit zwei in einem Lagerglied (10) sitzenden Kugellagern (12, 14), die je einen inneren und einen äußeren Kugellagerring (16, 26) aufweisen, wobei die Kugellager gegeneinander verspannt sind, **gekennzeichnet** durch die Verfahrensschritte:

   a) Abstützen der Kugellagerringe (16, 26) einer ersten Art gegeneinander über ein inneres allseitig bewegliches Gelenk (42), dessen Schwenkpunkt auf der Drehachse der Drehlagerung liegt,

   b) Ausüben von gegeneinandergerichteten axialen Kräften auf die Kugellagerringe (18, 28) der zweiten Art über je ein äußeres allseitig bewegliches Gelenk (48, 54), dessen Schwenkpunkt auf der Drehachse der Drehlagerung liegt,

   c) Fixieren der Kugellagerringe (16, 26) der ersten Art in dem Lagerglied (10) unter der Vorspannung.

2. Verfahren nach Anspruch 1, **dadurch gekennzeichnet, daß** die Kugellagerringe der ersten Art die äußeren Kugellagerringe und die Kugellagerringe der zweiten Art die inneren Kugellagerringe sind.

3. Verfahren nach Anspruch 1 oder 2, **dadurch gekennzeichnet, daß** die Abstützung und Kraftausübung über Kardangelenke als allseitig bewegliche Gelenke (42, 48, 54) erfolgt.

4. Verfahren nach einem der Ansprüche 1 bis 3, **dadurch gekennzeichnet, daß** die Fixierung mittels eines aushärtenden Klebers erfolgt, der in einen Klebspalt (56, 58) zwischen Lagerglied (10) und äußeren Kugellagerringen (16, 26) eingebracht wird.

5. Verfahren nach einem der Ansprüche 1 bis 4, **dadurch gekennzeichnet, daß** die axialen Kräfte durch Schrauben (44, 50) ausgeübt werden, die in die Stirnfläche einer in den Kugellagern (12, 14) gelagerten Welle (36) eingeschraubt werden und mit ihren Köpfen (46, 52) auf die äußeren, allseitig beweglichen Gelenke (48, 54) drücken.

6. Verfahren nach einem der Ansprüche 1 bis 5, **dadurch gekennzeichnet, daß** die inneren und äußeren Kugellagerringe (16, 18; 26, 28) während des Fixierens gegeneinander rotieren.

7. Verfahren nach einem der Ansprüche 1 bis 6, **dadurch gekennzeichnet, daß** die äußeren, allseitig beweglichen Gelenke (48, 54) nach dem Fixieren der äußeren Kugellagerringe (16, 20) entfernt werden.

Fig.2

Fig.1

Fig.3

Fig.4

**Europäisches Patentamt**

# EUROPÄISCHER RECHERCHENBERICHT

Nummer der Anmeldung

**EP 90 12 2817**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 507 233   (GRUNDIG)<br>* Insgesamt *<br>— — — | 1 | F 16 C<br>43/04<br>F 16 C 25/08 //<br>F 16 D 3/72 |
| A | DE-B-1 066 389   (R. SPIETH)<br>— — — | | |
| A | US-A-4 523 864   (J.D. WALTER et al.)<br>— — — | | |
| D,A | US-A-4 665 605   (H. KEMPAS)<br>— — — | | |
| A | US-A-4 854 750   (A. LAVIN)<br>— — — — — | | |
| | | | **RECHERCHIERTE SACHGEBIETE (Int. Cl.5)**<br><br>F 16 C<br>F 16<br>D |

Der vorliegende Recherchenbericht wurde für alle Patentansprüche erstellt

| Recherchenort | Abschlußdatum der Recherche | Prüfer |
|---|---|---|
| Den Haag | 19 März 91 | BEGUIN C.P. |